# EUROPEAN PATENT APPLICATION

(11) **EP 3 396 820 A1**
(43) Date of publication of application: **31.10.2018**
(21) Application number: 18164661.3
(22) Date of filing: 28.03.2018
(51) Int. Cl.: H02K 9/197, H02K 1/20, H02K 1/32, H02K 3/48

(54) **ELECTRICAL MACHINE APPARATUS**

(30) Priority: 24.04.2017 GB 201706438
(71) Applicant: Rolls-Royce plc, London SW1E 6AT (GB); Rolls-Royce Marine AS, 6065 Ulsteinvik (NO)
(72) Inventor: Stieger, Rory, Derby, Derbyshire DE24 8BJ (GB); Rokke, Astrid, Derby, Derbyshire DE24 8BJ (GB)
(74) Representative: Rolls-Royce plc

(57) **Abstract**

Electrical machine apparatus comprising: a first member comprising a ferromagnetic material and defining a first aperture arranged to provide a coolant to cool an electrical conductor.

## Description

### TECHNOLOGICAL FIELD

The present disclosure concerns electrical machine apparatus.

### BACKGROUND

Electrical machines, such as generators and motors may include a stator, a rotor, a magnet arrangement, and an electrical conductor (often referred to as 'windings'). In some examples, the magnet arrangement may be permanent magnets that are mounted on the rotor and the electrical conductor may be mounted on the stator. Where such an electrical machine operates as a generator, the rotor may be rotated and the moving magnetic field generated by the magnet arrangement induces a current in the electrical conductor to provide an electrical output from the electrical machine. Where such an electrical machine operates as a motor, electricity may be supplied to the electrical conductor to generate a magnetic field that attracts/repels the magnet arrangement and thus causes the rotor to rotate. The electrical conductor may generate thermal energy during operation that may be detrimental to the operation of the electrical machine.

### BRIEF SUMMARY

According to various examples there is provided electrical machine apparatus comprising: a first member comprising a ferromagnetic material and defining a first aperture arranged to provide a coolant to cool an electrical conductor.

The electrical machine apparatus may further comprise a second member comprising a ferromagnetic material and defining a second aperture arranged to receive the coolant from a coolant reservoir.

The first member and the second member may be planar and may be coupled together to form a laminate component of an electrical machine.

The electrical machine apparatus may further comprise a third member comprising a ferromagnetic material and defining a third aperture arranged to drain the coolant to a coolant reservoir.

The first member and the third member may be planar and may be coupled together to form a laminate component of an electrical machine.

The electrical machine apparatus may further comprise a fourth member comprising a ferromagnetic material and defining a fourth aperture arranged to provide a conduit for the coolant within the electrical machine apparatus.

The first member and the fourth member may be planar and may be coupled together to form a laminate component of an electrical machine.

The first member may be a part of a stator or may be a rotor of an electrical machine.

The first member may further define: a second aperture arranged to receive the coolant from a coolant reservoir; a third aperture arranged to drain the coolant to a coolant reservoir; and a plurality of conduits for enabling the coolant to flow between the second aperture, the first aperture, and the third aperture.

The first member may be moulded.

The first member may be a stator or a rotor of an electrical machine.

The electrical machine apparatus may further comprise: an electrical conductor; and an electrical insulator connected between the first member and the electrical conductor.

The first aperture may be arranged to provide the coolant directly to the electrical conductor to cool the electrical conductor.

The first aperture may be arranged to provide the coolant directly to the electrical insulator to indirectly cool the electrical conductor.

According to various examples there is provided an electrical machine comprising the electrical machine apparatus as described in any of the preceding paragraphs.

According to various examples there is provided a gas turbine engine comprising the electrical machine apparatus as described in any of the preceding paragraphs.

According to various examples there is provided an aircraft comprising the electrical machine apparatus as described in any of the preceding paragraphs.

According to various examples there is provided a watercraft comprising the electrical machine apparatus as described in any of the preceding paragraphs.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a cross sectional front view of electrical machine apparatus according to various examples;
Fig. 2 illustrates a radially inward view of the electrical machine apparatus illustrated in Fig. 1;
Fig. 3 illustrates a front view of a first stator member according to various examples;
Fig. 4 illustrates a front view of a second stator member according to various examples;
Fig. 5 illustrates a front view of a third stator member according to various examples;
Fig. 6 illustrates a front view of a fourth stator member according to various examples;
Fig. 7 illustrates a front view of a fifth stator member according to various examples;
Fig. 8 illustrates a front view of a sixth stator member according to various examples;
Fig. 9 illustrates a front view of a seventh stator member according to various examples;
Fig. 10 illustrates a front view of an eighth stator member according to various examples;
Fig. 11 illustrates a front view of a ninth stator member according to various examples;
Fig. 12 illustrates a cross sectional radially inward view of a part of the electrical machine apparatus illustrated in Figs. 1 and 2;
Fig. 13 illustrates a perspective view of another electrical machine apparatus according to various examples;
Fig. 14 illustrates a schematic diagram of a gas turbine engine according to various examples;
Fig. 15 illustrates a schematic diagram of an aircraft according to various examples; and
Fig. 16 illustrates a schematic diagram of a watercraft according to various examples.

### DETAILED DESCRIPTION

In the following description, the terms 'connected' and 'coupled' mean operationally connected and coupled. It should be appreciated that there may be any number of intervening components between the mentioned features, including no intervening components.

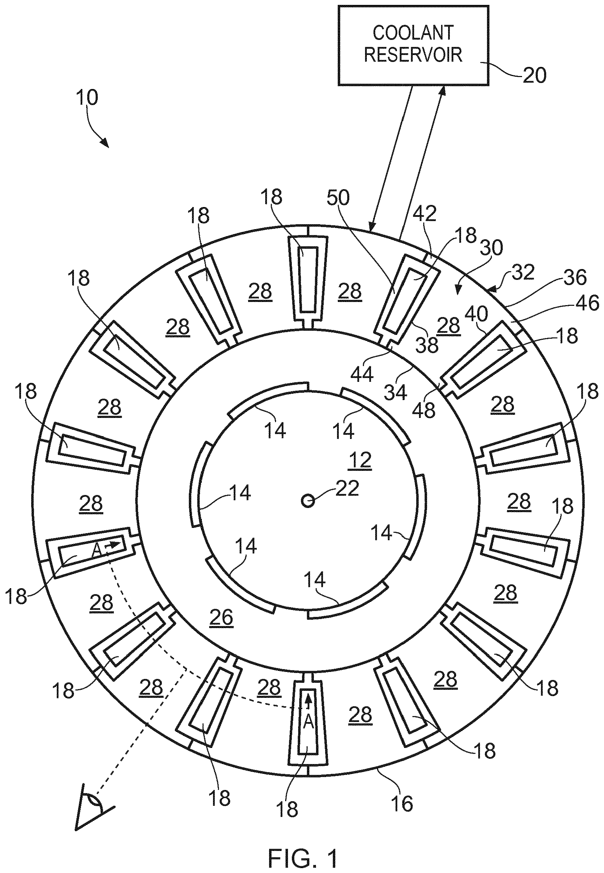

Fig. 1 illustrates a cross sectional front view of electrical machine apparatus 10 according to various examples. The electrical machine apparatus 10 may comprise any type of electrical machine, and may comprise a generator or a motor (for example, the electrical machine apparatus 10 may be, or comprise, a brushless electric motor).

The electrical machine apparatus 10 includes a rotor 12, a magnet arrangement 14, a stator 16, an electrical conductor 18, and a coolant reservoir 20. The electrical machine apparatus 10 has a longitudinal axis 22. In some examples, the coolant reservoir 20 may be thermally coupled to a fluid stream (for example, an air stream) to remove heat from the coolant reservoir 20.

In some examples, the electrical machine apparatus 10 may be a module. As used herein, the wording 'module' refers to a device or apparatus where one or more features are included at a later time and, possibly, by another manufacturer or by an end user. For example, where the electrical machine apparatus 10 is a module, the electrical machine apparatus 10 may only include the stator 16 or a part of the stator 16, and the remaining features (such as the rotor 12, the magnet arrangement 14, other parts of the stator 16, the electrical conductor 18, and the coolant reservoir 20) may be added by another manufacturer, or by an end user.

The rotor 12 extends along the longitudinal axis 22 of the electrical machine apparatus 10. The rotor 12 may comprise any suitable ferromagnetic material (iron, nickel or cobalt for example) and may have any suitable cross sectional shape (the rotor 12 illustrated in Fig. 1 has a circular cross sectional shape for example). The rotor 12 is arranged to rotate about the longitudinal axis 22. The magnet arrangement 14 includes a plurality of permanent magnets 14 that are mounted to the exterior surface of the rotor 12. In some examples, the plurality of permanent magnets 14 may be embedded inside the ferromagnetic material of the rotor 12.

It should be appreciated that the magnet arrangement 14 may include any number of permanent magnets and may comprise more or less than six permanent magnets as illustrated in Fig. 1. In some examples, the magnet arrangement 14 may alternatively include a plurality of electrical conductors (which may be referred to as 'windings') that function as electromagnets.

The stator 16 may have any suitable shape and may have a circular cross sectional shape, an elliptical cross sectional shape, or a polygonal cross sectional shape. The stator 16 defines a cavity 26 in which the rotor 12 is positioned. The cavity 26 is sized and shaped to enable the rotor 12 to rotate three hundred and sixty degrees around the longitudinal axis 22. The stator 16 may comprise any suitable ferromagnetic material and may comprise iron, nickel or cobalt for example.

The stator 16 has a laminated structure and includes a plurality of stator members 28. Each stator member 28 is oriented perpendicularly to the longitudinal axis 22 and has a planar shape comprising a front surface 30, a rear surface 32, an inner edge 34, an outer edge 36, a first side edge 38, and a second side edge 40. The first side edge 38 includes a first protrusion 42 that extends outwards circumferentially (relative to the longitudinal axis 22) from the corner of the first side edge 38 and the outer edge 36, and a second protrusion 44 that extends outwards circumferentially (relative to the longitudinal axis 22) from the corner of the first side edge 38 and the inner edge 34. The second side edge 40 includes a third protrusion 46 that extends outwards circumferentially (relative to the longitudinal axis 22) from the corner of the second side edge 40 and the outer edge 36, and a fourth protrusion 48 that extends outwards circumferentially (relative to the longitudinal axis 22) from the corner of the second side edge 40 and the inner edge 34.

In other examples, the plurality of stator members 28 may have a different shape or shapes. For example, at least some of the stator members 28 may not include protrusions that extend circumferentially outwards and may instead include recesses. In some examples, the plurality of stator members 28 may not comprise the second protrusion 44 and/or the fourth protrusion 48.

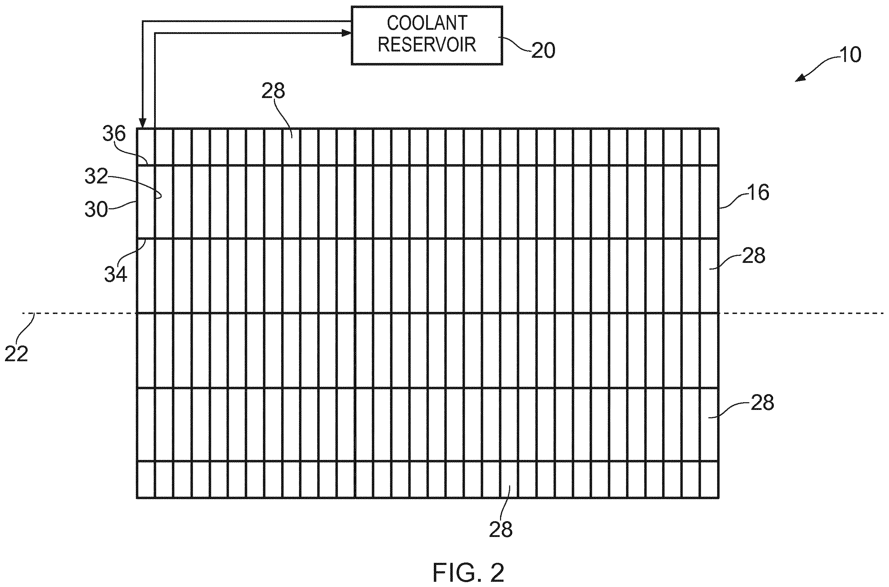

The plurality of stator members 28 are arranged such that the first protrusion 42 and the third protrusion 46 of adjacent stator members 28 are connected to one another and define an annulus. The second protrusion 44 and the fourth protrusion 48 of adjacent stator members 28 are not connected to one another and define a gap there between. The front surface 30 and the rear surface 32 of adjacent stator members 28 are connected to one another to form the laminated structure of the stator 16 (as illustrated in Fig. 2). The plurality of stator members 28 are also arranged such that the first side edge 38 of a stator member 28 and the second side edge 40 of an adjacent stator member 28 define a cavity 50 there between.

In some examples, the first protrusion 42 and the third protrusion 46 may not be connected to one another, and may instead be in contact with one another (that is, they may be abutting or touching one another). Furthermore, the second protrusion 44 and the fourth protrusion 48 may not define a gap there between, and instead may be connected to one another, or may be in contact with one another.

The electrical conductor 18 may comprise any suitable material (copper for example) and may have any suitable shape (for example, the cross sectional shape of the electrical conductor may be circular or rectangular). The electrical conductor 18 is positioned within the cavities 50 defined between adjacent stator members 28.

The coolant reservoir 20 may comprise one or more containers for storing coolant, a pipe arrangement that connects the one or more containers to the stator 16, and a pump arrangement for pumping the coolant to the stator 16 (and thus circulating the coolant through the stator 28). The coolant may be any suitable coolant, and may be oil for example. In Figs. 1 and 2, a single set of arrows are illustrated for representing the flow of the coolant to and from the stator 16. It should be appreciated however that the electrical machine apparatus 10 may comprise a plurality of conduits for transferring the coolant to and from the stator 16 at a plurality of different locations on the stator 16.

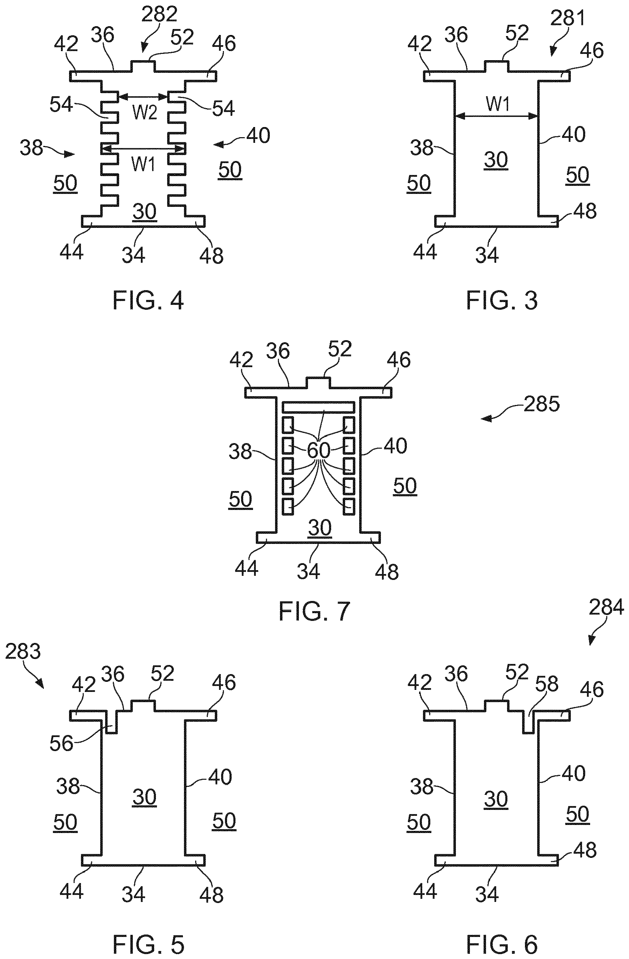

The stator members 28 have various different shapes for enabling the circulation of the coolant through the stator 16 to cool the electrical conductor 18. The shapes of the stator members 28 are described in the following paragraphs with reference to Figs. 3 to 11.

Fig. 3 illustrates a front view of a first stator member 281 according to various examples. The first side edge 38 is straight between the first protrusion 42 and the second protrusion 44. Similarly, the second side edge 40 is straight between the third protrusion 46 and the fourth protrusion 48. The first stator member 281 has a width W1 between the straight edges of the first side edge 38 and the second side edge 40. The first stator member 281 includes a fifth protrusion 52 that extends radially outwards (relative to the longitudinal axis 22) from the outer edge 36. The fifth protrusion 52 may form part of a connection arrangement for connecting the stator 16 to a further object (such as a casing of the electrical machine for example).

In the example illustrated in Fig. 3, the width W1 is constant between the inner edge 34 and the outer edge 36. In other examples, the width W1 may vary between the inner edge 34 and the outer edge 36 (for example, the width W1 may increase from the inner edge 34 to the outer edge 36).

Fig. 4 illustrates a front view of a second stator member 282 according to various examples. The second stator member 282 differs from the first stator member 281 in that the second stator member 282 includes a plurality of first apertures 54 that extend between (and through) the front surface 30 and the rear surface 32 and are positioned along the first side edge 38 and the second side edge 40. The plurality of first apertures 54 thus form a plurality of open slots along the first and second side edges 38, 40 and the width of the second stator member 282 between opposing first apertures 54 is W2 (which is less than W1). As explained in greater detail in the following paragraphs, the first apertures 54 are arranged to provide the coolant into the cavity 50 to cool the electrical conductor 18. It should be appreciated that the second stator member 282 may include any number of first apertures 54 (that is, the second stator member 282 may define one or more first apertures 54).

In the example illustrated in Fig. 4, the widths W1 and W2 are constant between the inner edge 34 and the outer edge 36. In other examples, the widths W1 and W2 may vary between the inner edge 34 and the outer edge 36 (for example, the widths W1 and W2 may increase from the inner edge 34 to the outer edge 36).

Fig. 5 illustrates a front view of a third stator member 283 according to various examples. The third stator member 283 differs from the first stator member 281 in that the third stator member 283 includes a second aperture 56 that is arranged to receive the coolant from the coolant reservoir 20 (that is, the second aperture 56 forms at least a part of an inlet to the stator 16 for coolant from the coolant reservoir 20). The second aperture 56 is a slot in the outer edge 36 of the third stator member 283 that extends radially inwardly (relative to the longitudinal axis 22) from the outer edge 36. The second aperture 56 extends between (and through) the front surface 30 and the rear surface 32 of the third stator member 283.

Fig. 6 illustrates a front view of a fourth stator member 284 according to various examples. The fourth stator member 284 differs from the first stator member 281 in that the fourth stator member 284 includes a third aperture 58 that is arranged to drain the coolant from the stator 16 to the coolant reservoir 20 (in other words, the third aperture 58 forms at least a part of an outlet for coolant circulating within the stator 16). The third aperture 58 is a slot in the outer edge 36 of the third stator member 284 that extends radially inwardly (relative to the longitudinal axis 22) from the outer edge 36. The third aperture 58 extends between (and through) the front surface 30 and the rear surface 32 of the fourth stator member 284.

It should be appreciated that where the third stator member 283 is symmetrical, the fourth stator member 284 may be a third stator member 283 that is turned over one hundred and eighty degrees. In other words, the fourth stator member 284 may not be a unique part and may be just a different orientation of the third stator member 283.

Fig. 7 illustrates a front view of a fifth stator member 285 according to various examples. The fifth stator member 285 differs from the first stator member 281 in that the fifth stator member 285 includes a plurality of fourth apertures 60 that are arranged to provide one or more conduits for the coolant within the stator 16.

In more detail, the fourth apertures 60 may be arranged to receive coolant from the second aperture 56, provide the coolant to one or more first apertures 54, receive the coolant from the one or more first apertures 54, and provide the coolant to the third aperture 58. The fourth apertures 60 are closed slots that extend between (and through) the front surface 30 and the rear surface 32. It should be appreciated that the fifth stator member 285 may include any number of fourth apertures 60 (that is, the fifth stator member 285 may define one or more fourth apertures 60).

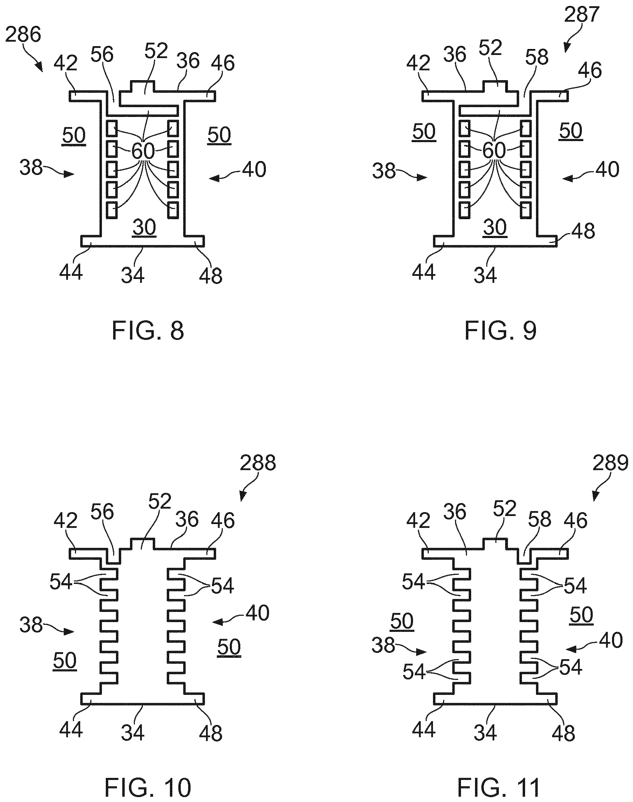

It should be appreciated that one or more of the stator members 28 may define a combination of the first, second, third and fourth apertures 54, 56, 58, 60. Examples of such stator members 28 are described in the following paragraphs with reference to Figs. 8 to 11.

Fig. 8 illustrates a front view of a sixth stator member 286 according to various examples. The sixth stator member 286 includes a second aperture 56 and a plurality of fourth apertures 60. The radially outmost fourth aperture 60 (relative to the longitudinal axis 22) is connected to the second aperture 56 and together, the two apertures define an L shape aperture.

Fig. 9 illustrates a front view of a seventh stator member 287 according to various examples. The seventh stator member 287 includes a third aperture 58 and a plurality of fourth apertures 60. The radially outmost fourth aperture 60 (relative to the longitudinal axis 22) is connected to the third aperture 58 and together, the two apertures define an L shape aperture.

Fig. 10 illustrates a front view of an eighth stator member 288 according to various examples. The eighth stator member 288 includes a second aperture 56 and a plurality of first apertures 54 in the first side edge 38 and in the second side edge 40.

Fig. 11 illustrates a front view of a ninth stator member 289 according to various examples. The ninth stator member 289 includes a third aperture 58 and a plurality of first apertures 54 in the first side edge 38 and in the second side edge 40.

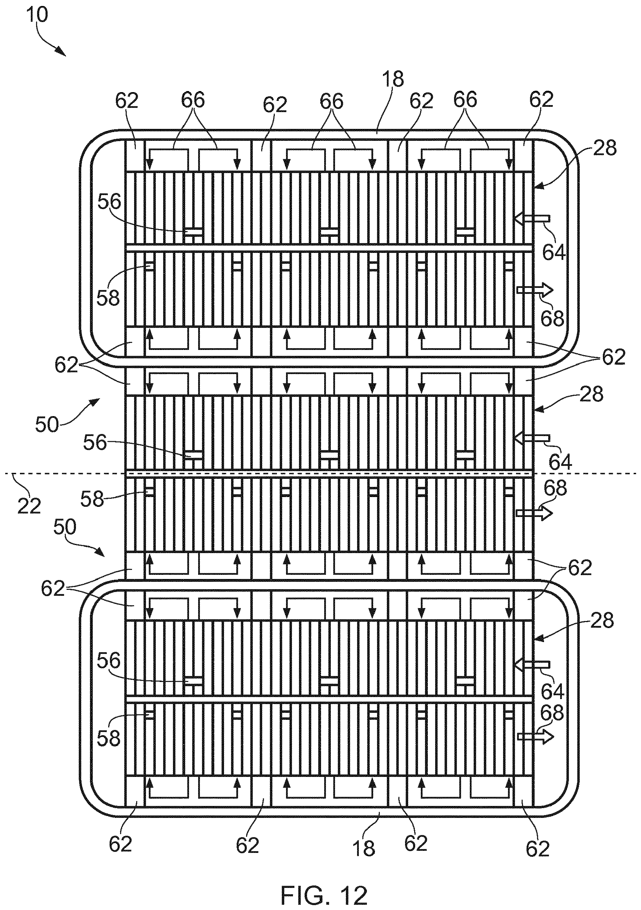

Fig. 12 illustrates a cross sectional radially inward view of a part of the electrical machine apparatus 10 illustrated in Figs. 1 and 2. In particular, Fig. 12 illustrates the view through section A-A illustrated in Fig. 1. The electrical machine apparatus 10 includes a plurality of stator members 28 that are laminated together, an electrical conductor 18, and a plurality of electrical insulators 62.

The plurality of electrical insulators 62 are connected between the stator members 28 and the electrical conductor 18 and are configured to secure the electrical conductor 18 within the cavities 50. The electrical insulators 62 may comprise any suitable material (such as, a polymer or ceramic) for electrically insulating the stator members 28 from the electrical conductor 18. In some examples, the electrical insulators 62 may also be thermal insulators and comprise materials such as a polymer or ceramic. In other examples, the electrical insulators 62 may be thermally conductive and comprise materials such as certain types of ceramic.

The plurality of stators members 28 are arranged so that coolant may ingress the stator 16 through the third apertures 56 (as illustrated by arrows 64), egress from the first apertures 54, impinge on the electrical conductor 18 and ingress the stator 16 through the first apertures 54 (as illustrated by arrows 66), and egress (and drain) from the stator 16 via the third apertures 58 (as illustrated by arrows 68). It should be appreciated that the arrows illustrated in Fig. 12 may be either direction.

In some examples, the second stator members 282, the electrical insulators 62, and the electrical conductor 18 may be arranged so that the coolant is provided directly to the electrical conductor 18 to cool the electrical conductor 18. In other words, the coolant does not impinge on any part of the electrical machine apparatus 10 between egressing the first aperture 54 and impinging upon the electrical conductor 18.

In other examples where the electrical insulators 62 are thermally conductive, the second stator members 282, the electrical insulators 62, and the electrical conductor 18 may be arranged so that the coolant is provided directly to the electrical insulators 62 to cool the electrical insulators 62 and thus indirectly cool the electrical conductor 18 via thermal conduction.

The electrical machine apparatus 10 may be advantageous in that the performance of the electrical machine apparatus 10 may be improved due to the cooling of the electrical conductor 18. The plurality of first apertures 54 may be arranged so that the electrical conductor 18 is cooled along its length within the cavities 50 which may enable higher current carrying capacity of the electrical conductor 18 and more uniform temperature distribution along the length of the electrical conductor 18.

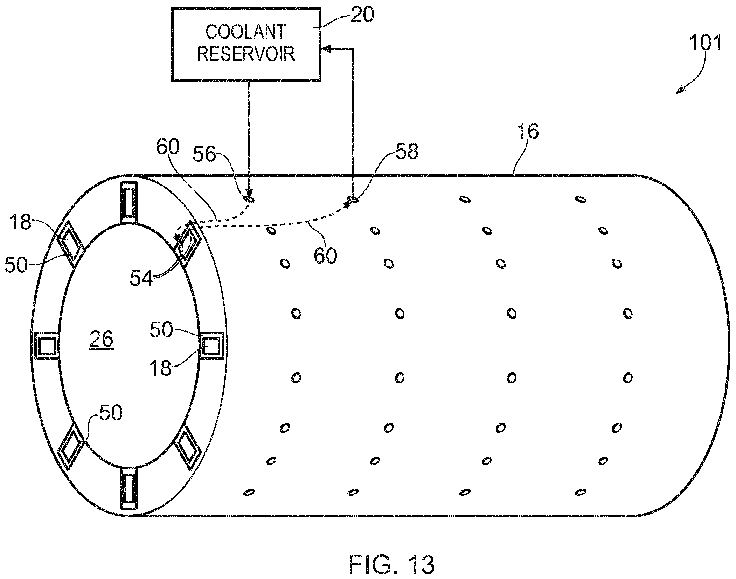

Fig. 13 illustrates a perspective view of another electrical machine apparatus 101 according to various examples. The electrical machine apparatus 101 is similar to the electrical machine apparatus 10 illustrated in the preceding figures and where the features are similar, the same reference numerals are used.

The electrical machine apparatus 101 differs from the electrical machine apparatus 10 in that the stator 16 is a moulded body. Similar to the example illustrated in Figs. 1 and 2, the stator 16 defines a central cavity 26 for receiving the rotor 12 and the magnet arrangement 14, and a plurality of cavities 50 for receiving the electrical conductor 18. The stator 16 may comprise any suitable ferromagnetic material and may comprise a ferromagnetic composite material for example.

The moulded stator 16 defines the one or more first apertures 54 for cooling the electrical conductor 18, the one or more second apertures 56 that are arranged to receive coolant from the coolant reservoir 20; the one or more third apertures 58 that are arranged to drain the coolant to the coolant reservoir 20; and a plurality of conduits for enabling the coolant to flow between the one or more second apertures 56, the one or more first apertures 54, and the one or more third apertures 58.

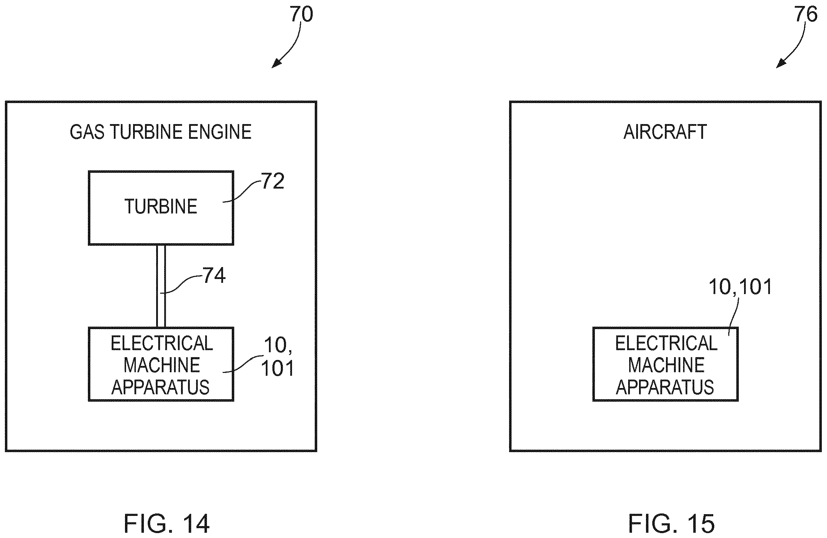

Fig. 14 illustrates a schematic diagram of a gas turbine engine 70 according to various examples. The gas turbine engine 70 comprises a turbine 72, a shaft 74 and the electrical machine apparatus 10, 101. The rotor 12 of the electrical machine apparatus 10, 101 is coupled to the turbine 72 via the shaft 74.

In operation, the electrical machine apparatus 10, 101 is configured to operate as a generator. In more detail, the turbine 72 rotates during operation and provides torque to the rotor 12 of the electrical machine apparatus 10, 101 via the shaft 74. The rotation of the rotor 12 and the magnet arrangement 14 induces an electrical current in the electrical conductor 18.

Fig. 15 illustrates a schematic diagram of an aircraft 76 comprising the electrical machine apparatus 10, 101. The electrical machine apparatus 10, 101 may be coupled to an engine (such as a gas turbine engine or an internal combustion engine) and be operable as a generator for generating electricity. In other examples, the electrical machine apparatus 10, 101 may be coupled to a fan and may function as a motor for providing torque to the fan.

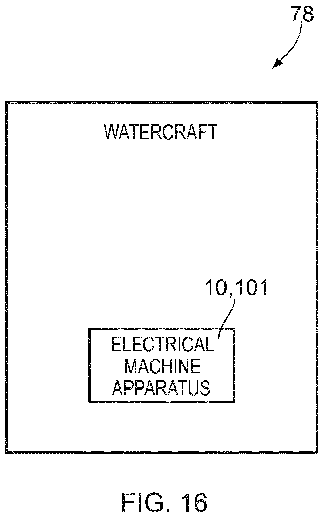

Fig. 16 illustrates a schematic diagram of a watercraft 78 comprising the electrical machine apparatus 10, 101. The electrical machine apparatus 10, 101 may be coupled to an engine (such as a gas turbine engine, an internal combustion engine, or a nuclear power plant) and be operable as a generator for generating electricity. In other examples, the electrical machine apparatus 10, 101 may be coupled to a propulsor (such as an azimuth thruster or a propeller) and may function as a motor for providing torque to the propulsor.

It will be understood that the invention is not limited to the embodiments above-described and various modifications and improvements can be made without departing from the concepts described herein. For example, the rotor 12 may additionally or alternatively comprise the structures illustrated in Figs. 1 to 13 and thus define one or more first apertures 54, one or more second apertures 56, one or more third apertures 58, and one or more fourth apertures 60 for providing coolant to cool the electrical conductor 18. Such a rotor 12 may have a laminated structure (as illustrated in Figs. 1 to 12) or may be a moulded body (as illustrated in Fig. 13).

While the electrical machines 10, 101 have an inner rotor 12 and an outer stator 16, it should be appreciated that the above described examples may also be used in an electrical machine having an inner stator and an outer rotor.

While the electrical machines 10, 101 have been described as motors and generators, it should be appreciated that the above described examples may also be used in transformers. In such examples, the core around which the electrical conductor is wound may comprise structures similar to those illustrated in Figs. 3 to 13.

Except where mutually exclusive, any of the features may be employed separately or in combination with any other features and the disclosure extends to and includes all combinations and sub-combinations of one or more features described herein.

## Claims

1. Electrical machine apparatus comprising:
a first member comprising a ferromagnetic material and defining a first aperture arranged to provide a coolant to cool an electrical conductor.

2. Electrical machine apparatus as claimed in claim 1, further comprising a second member comprising a ferromagnetic material and defining a second aperture arranged to receive the coolant from a coolant reservoir.

3. Electrical machine apparatus as claimed in claim 2, wherein the first member and the second member are planar and are coupled together to form a laminate component of an electrical machine.

4. Electrical machine apparatus as claimed in any of the preceding claims, further comprising a third member comprising a ferromagnetic material and defining a third aperture arranged to drain the coolant to a coolant reservoir.

5. Electrical machine apparatus as claimed in claim 4, wherein the first member and the third member are planar and are coupled together to form a laminate component of an electrical machine.

6. Electrical machine apparatus as claimed in any of the preceding claims, further comprising a fourth member comprising a ferromagnetic material and defining a fourth aperture arranged to provide a conduit for the coolant within the electrical machine apparatus.

7. Electrical machine apparatus as claimed in claim 6, wherein the first member and the fourth member are planar and are coupled together to form a laminate component of an electrical machine.

8. Electrical machine apparatus as claimed in any of the preceding claims, wherein the first member is a part of a stator or a rotor of an electrical machine.

9. Electrical machine apparatus as claimed in claim 1, wherein the first member further defines: a second aperture arranged to receive the coolant from a coolant reservoir; a third aperture arranged to drain the coolant to a coolant reservoir; and a plurality of conduits for enabling the coolant to flow between the second aperture, the first aperture, and the third aperture.

10. Electrical machine apparatus as claimed in claim 9, wherein the first member is moulded.

11. Electrical machine apparatus as claimed in claim 9 or 10, wherein the first member is a stator or a rotor of an electrical machine.

12. Electrical machine apparatus as claimed in any of the preceding claims, further comprising: an electrical conductor; and an electrical insulator connected between the first member and the electrical conductor.

13. Electrical machine apparatus as claimed in claim 12, wherein the first aperture is arranged to provide the coolant directly to the electrical conductor to cool the electrical conductor.

14. Electrical machine apparatus as claimed in claim 12, wherein the first aperture is arranged to provide the coolant directly to the electrical insulator to indirectly cool the electrical conductor.

15. An electrical machine, or a gas turbine engine, or an aircraft, or a watercraft comprising the electrical machine apparatus as claimed in any of the preceding claims.
